# EUROPÄISCHE PATENTSCHRIFT

(11) **EP 3 412 145 B1**
(45) Veröffentlichungstag und Bekanntmachung des Hinweises auf die Patenterteilung: **15.07.2020**
(21) Anmeldenummer: 17175316.3
(22) Anmeldetag: 09.06.2017
(51) Int. Cl.: A01K 9/00, A61M 27/00

(54) **FÜTTERUNGSSYSTEM ZUR VERSORGUNG VON NUTZTIEREN**
DRY FODDER SUPPLY SYSTEM FOR SUPPLYING LIVESTOCK
SYSTÈME D'AFFOURAGEMENT DESTINÉ À ALIMENTER DU BÉTAIL

(43) Veröffentlichungstag der Anmeldung: 12.12.2018
(60) Teilanmeldung: 20178805.6
(73) Patentinhaber: Holm, Hans Joachim, 24784 Westerrönfeld (DE); Laue, Hans-Joachim, 24783 Osterrönfeld (DE)
(72) Erfinder: Holm, Hans Joachim, 24784 Westerrönfeld (DE); Laue, Hans-Joachim, 24783 Osterrönfeld (DE)
(74) Vertreter: Hauck Patentanwaltspartnerschaft mbB

(56) Entgegenhaltungen:
- WO-A2-2016/018162
- CN-U- 202 663 936
- DE-A1- 19 845 168
- DE-B3-102011 009 076
- FR-A1- 2 689 727
- US-A1- 2005 241 589

## Beschreibung

Die Erfindung betrifft ein Fütterungssystem zur Versorgung von Nutztieren, insbesondere von Kälbern mit einem flüssigen Nahrungsmittel. Bekannte Fütterungssysteme zu diesem Zweck werden auch als Tränkeautomaten bezeichnet. Sie weisen einen Anmischbehälter auf, in dem aus Wasser und Milchaustauscher einzelne Tränkeportionen angemischt werden. Eine so zubereitete Tränkeportion kann von einem Kalb über einen Saugnuckel, der über eine Leitung mit dem Anmischbehälter verbunden ist, gesoffen werden. Auf diese Weise können die Tränkeportionen jeweils frisch hergestellt werden. Werden die an den Saugnuckel herantretenden Kälber zudem identifiziert, kann die einem Kalb verabreichte Tränkemenge individuell erfasst und/oder gesteuert werden.

Steht zur Fütterung der Kälber zusätzlich Vollmilch zur Verfügung, kann hierfür ebenfalls ein Tränkeautomat eingesetzt werden. In diesem Fall wird statt Wasser und Milchaustauscher die Vollmilch in den Anmischbehälter eingegeben. Solange der Vorrat reicht, kann dann Tränke aus 100 % Vollmilch oder einer Mischung aus Wasser und Milchaustauscher oder einer Mischung aus Vollmilch, Wasser und Milchaustauscher verfüttert werden.

Aus der Druckschrift WO 2016/018162 A2 ist ein Fütterungssystem mit einem Tränkeautomaten bekannt geworden, der flüssiges Nahrungsmittel aus Vollmilch und/oder Milchaustauscher anmischen und über eine Ringleitung an mehrere Abrufstände abgeben kann.

Aus der Druckschrift CN 202 663 936 U ein Fütterungssystem mit einem Tränkeautomaten und einem externen Vollmilchtank bekannt geworden.

Aus der Druckschrift DE 10 2011 009 076 B3 ist ein Fütterungssystem mit den Merkmalen des Oberbegriffs des Anspruchs 1 bekannt geworden.

Davon ausgehend ist es die Aufgabe der Erfindung, ein Fütterungssystem zur Versorgung von Nutztieren zur Verfügung zu stellen, mit dem eine gegebene Anzahl von Nutztieren optimal versorgt werden kann. Diese Aufgabe wird gelöst durch das Fütterungssystem mit den Merkmalen des Anspruchs 1. Vorteilhafte Ausgestaltungen sind in den Unteransprüchen angegeben.

Das Fütterungssystem dient zur Versorgung von Nutztieren und hat
- einen Wasseranschluss,
- einen Vorratsbehälter für Milchaustauscher,
- einen Vollmilchtank,
- einen Anmischbehälter, in dem eine Tränkeportion anmischbar ist,
- ein in dem Anmischbehälter angeordnetes Rührwerk,
- eine Vollmilch-Zuführeinrichtung, mit der dem Anmischbehälter Vollmilch aus dem Vollmilchtank zugeführt werden kann,
- eine Milchaustauscher-Zuführeinrichtung, mit der dem Anmischbehälter Milchaustauscher aus dem Vorratsbehälter zugeführt werden kann,
- eine Wasser-Zuführeinrichtung, mit der dem Anmischbehälter Wasser von dem Wasseranschluss zugeführt werden kann,
- einen Sensor zur Ermittlung einer in dem Vollmilchtank enthaltenen Vollmilchmenge,
- eine elektronische Steuerung, die mit dem Sensor, dem Rührwerk, der Vollmilch-Zuführeinrichtung, der Milchaustauscher-Zuführeinrichtung und der Wasser-Zuführeinrichtung verbunden ist,
- wobei die elektronische Steuerung dazu ausgebildet ist, auf Grundlage der mit dem Sensor ermittelten Vollmilchmenge eine Vollmilch-Dosiermenge zu bestimmen und durch Ansteuern der Vollmilch-Zuführeinrichtung, der Milchaustauscher-Zuführeinrichtung, der Wasser-Zuführeinrichtung sowie des Rührwerks eine Tränkeportion anzumischen, die diese Vollmilch-Dosiermenge enthält.

Das Fütterungssystem zeichnet sich also zunächst dadurch aus, dass es sowohl für die Vollmilch als auch für den Milchaustauscher und das Wasser jeweils eine eigene Zuführeinrichtung aufweist, mit der die betreffenden Tränkekomponenten in den Anmischbehälter eingegeben werden können. Die Vollmilch-Zuführeinrichtung kann eine von dem Vollmilchtank zum Anmischbehälter führende Leitung und eine darin angeordnete Absperr- und/oder Fördereinrichtung aufweisen. Die Milchaustauscher-Zuführeinrichtung kann eine Fördereinrichtung aufweisen, mit der der pulverförmige Milchaustauscher aus dem Vorratsbehälter für Milchaustauscher gefördert und in den Anmischbehälter eingegeben werden kann. Bei dieser Fördereinrichtung kann es sich beispielsweise um eine von einem Elektromotor angetriebene Förderschnecke handeln. Die Wasser-Zuführeinrichtung kann eine Wasserleitung umfassen, die von dem Wasseranschluss zu dem Anmischbehälter führt und in der eine Absperreinrichtung, insbesondere ein Magnetventil, angeordnet ist. Die elektronische Steuerung steuert die genannten Zuführeinrichtungen auf geeignete Weise an, um definierte Mengen der jeweiligen Tränkekomponenten in den Anmischbehälter einzugeben.

Eine weitere Besonderheit besteht darin, dass dem Vollmilchtank ein Sensor zugeordnet ist, mit dem die in dem Vollmilchtank enthaltene Vollmilchmenge ermittelt werden kann. Anders als das in der Regel aus einer Wasserleitung stammende Wasser und der in großen Mengen lagerfähige Milchaustauscher steht typischerweise nur eine begrenzte Menge an Vollmilch zur Verfügung. Durch die bei der Erfindung vorgesehene automatische Ermittlung der zur Verfügung stehenden Vollmilchmenge kann ein optimaler Einsatz der Vollmilch gewährleistet werden. Hierzu bestimmt die elektronische Steuerung auf Grundlage der mit dem Sensor ermittelten Vollmilchmenge eine Vollmilch-Dosiermenge und steuert die drei Zuführeinrichtungen dann so an, dass in einer angemischten Tränkeportion diese Vollmilch-Dosiermenge enthalten ist. Je nach Größe der herzustellenden Tränkeportion kann die Tränke über die Vollmilch-Dosiermenge hinaus Wasser und Milchaustauscher in einem geeigneten Mischungsverhältnis enthalten. Es versteht sich, dass gegebenenfalls weitere Tränkekomponenten zugeführt werden können, beispielsweise Nahrungsergänzungsmittel.

In jedem Fall enthält eine von dem Fütterungssystem hergestellte Tränkeportion die gewünschte Vollmilch-Dosiermenge. Insbesondere können ausgehend von einer bestimmten Vollmilchmenge mehrere Tränkeportionen hergestellt werden, die jeweils eine gewünschte Vollmilch-Dosiermenge oder dieselbe Vollmilch-Dosiermenge enthalten. Die zur Verfügung stehende Vollmilchmenge wird somit über mehrere Tränkeportionen verteilt und kommt im Idealfall allen zu versorgenden Nutztieren zugute, nicht nur denjenigen, die zufällig gerade bei Verfügbarkeit von Vollmilch zum Saufen kommen.

Es versteht sich, dass das Fütterungssystem insbesondere einen Saugnuckel umfassen kann, der über eine Leitung mit dem Anmischbehälter verbunden ist. In der Leitung ist vorzugsweise keine Fördereinrichtung enthalten, damit die zu versorgenden Nutztiere die in dem Anmischbehälter hergestellte Tränkeportion selbst durch Saugen an dem Saugnuckel aus dem Anmischbehälter zu dem Saugnuckel fördern können. Dies wird dem natürlichen Saugbedürfnis der Tiere gerecht.

In einer Ausgestaltung weist das Fütterungssystem eine Eingabevorrichtung zum Eingeben einer Information über eine Anzahl der zu versorgenden Nutztiere auf, wobei die Steuerung dazu ausgebildet ist, diese Information bei der Bestimmung der Vollmilch-Dosiermenge zu berücksichtigen. Sollen beispielsweise 30 Kälber versorgt werden, kann die elektronische Steuerung eine mit dem Sensor ermittelte Vollmilchmenge von beispielsweise 45 Litern gleichmäßig auf die Anzahl der zu versorgenden Nutztiere verteilen und beim Anmischen der nächsten 30 Tränkeportionen jeweils eine Vollmilch-Dosiermenge von 1,5 Litern in den Anmischbehälter eingeben. Somit wird die verfügbare Vollmilchmenge gleichmäßig auf die 30 Kälber verteilt. Die Eingabevorrichtung kann beispielsweise eine Tastatur oder ein Touchpad an dem Fütterungssystem sein. Ebenso möglich ist die Verwendung eines separaten Computers, über den das Fütterungssystem konfigurierbar ist. Findet eine Identifizierung der an den Saugnuckel herantretenden Kälber statt, kann sichergestellt werden, dass jedes Kalb eine der so hergestellten Tränkeportionen erhält. Tritt ein Kalb an den Saugnuckel heran, dass bereits eine Tränkeportion mit der Vollmich-Dosiermenge erhalten hat, kann für dieses Kalb wahlweise eine Tränkeportion ohne Vollmilch angemischt werden.

Bei der Erfindung weist das Fütterungssystem eine Eingabevorrichtung zum Eingeben einer Information über einen Befüllzeitpunkt des Vollmilchtanks auf, wobei die Steuerung dazu ausgebildet ist, auf Grundlage dieser Information eine Anzahl von bis zu dem Befüllzeitpunkt anzumischenden Tränkeportionen zu ermitteln und die Vollmilch-Dosiermenge so festzulegen, dass die Vollmilchmenge zu dem Befüllzeitpunkt (jedoch nicht wesentlich früher) aufgebraucht ist. Die verfügbare Vollmilchmenge wird also auf alle bis zum Nachfüllen des Vollmilchtanks herzustellenden Tränkeportionen gleichmäßig verteilt. Im obigen Beispiel kann beispielsweise zusätzlich berücksichtigt werden, dass der Vollmilchtank erst am Folgetag um 11 Uhr wieder aufgefüllt werden wird. Falls die zu versorgenden Kälber bis zu diesem Zeitpunkt voraussichtlich jeweils mehrere Tränkeportionen konsumieren werden, kann die verfügbare Vollmilchmenge auf eine entsprechend größere Anzahl von Tränkeportionen aufgeteilt werden. Beispielsweise könnte bei obiger Situation an einem Nachmittag um 15 Uhr davon ausgegangen werden, dass alle 30 zu versorgenden Kälber bis zum nächsten Befüllen des Vollmilchtanks jeweils drei Tränkeportionen abrufen werden. In diesem Fall können die 45 Liter Vollmilch auf 90 Tränkeportionen aufgeteilt werden, indem jeder Tränkeportion eine Vollmilch-Dosiermenge von 0,5 Litern zugeführt wird. Alle am Beispiel von Kälbern erläuterten Zusammenhänge gelten natürlich gleichermaßen für beliebige Nutztiere.

In einer Ausgestaltung ist der Sensor ein Füllstandssensor in dem Vollmilchtank. Der Füllstandssensor ist dazu ausgebildet, einen Flüssigkeitsspiegel in dem Vollmilchtank zu erfassen und einen Abstand dieses Flüssigkeitsspiegels von dem Sensor zu ermitteln. Hierfür sind Füllstandssensoren geeignet, die eine Entfernung zum Flüssigkeitsspiegel messen, beispielsweise durch das Aussenden einer Ultraschallwelle und Empfangen der am Flüssigkeitsspiegel reflektierten Ultraschallwelle. Ist der Sensor beispielsweise an oder in einem Boden des Vollmilchtanks angeordnet, entspricht der ermittelte Abstand der Füllhöhe in dem Vollmilchtank. Ist der Sensor beispielsweise in oder an einem Deckel des Vollmilchtanks angeordnet, kann der ermittelte Abstand einfach in eine Füllhöhe umgerechnet werden. In beiden Fällen kann anhand einer Kalibrierung aus dem ermittelten Abstand die in dem Vollmilchtank enthaltene Vollmilchmenge bestimmt werden.

In einer Ausgestaltung ist der Sensor ein Differenzdrucksensor, der in einer mit dem Vollmilchtank verbundenen Leitung der Vollmilch-Zuführeinrichtung angeordnet ist. Der Differenzdrucksensor misst die Druckdifferenz zwischen einem Druck in der Leitung und einem Umgebungsdruck, welche dem hydrostatischen Druck entspricht. Bei entsprechender Kalibrierung kann von dem hydrostatischen Druck auf die in dem Vollmilchtank enthaltende Vollmilchmenge geschlossen werden.

In einer Ausgestaltung weist die Vollmilch-Zuführeinrichtung eine Milchförderpumpe auf, wobei die Steuerung dazu ausgebildet ist, anhand der Vollmilch-Dosiermenge und eines Kalibrierfaktors eine Einschaltdauer für die Milchförderpumpe zu berechnen und dem Anmischbehälter die Vollmilch-Dosiermenge durch Einschalten der Milchförderpumpe für die berechnete Einschaltdauer zuzuführen. Die Milchförderpumpe kann insbesondere eine Kreiselpumpe sein. Durch diese Ausgestaltung kann die gewünschte Vollmilch-Dosiermenge besonders einfach dosiert werden.

In einer Ausgestaltung ist die Steuerung dazu ausgebildet, den Kalibrierfaktor vor jedem Anmischvorgang unter Berücksichtigung der von dem Sensor erfassten Daten festzulegen. Insbesondere kann der mit einem Differenzdrucksensor ermittelte hydrostatische Druck berücksichtigt werden, der dem Pumpenvordruck der Milchförderpumpe entspricht und der erheblichen Einfluss auf die Fördermenge der Milchförderpumpe pro Zeiteinheit hat. Die unterschiedliche Fördergeschwindigkeit der Milchförderpumpe kann jedoch ebenso gut berücksichtigt werden, wenn nicht direkt der hydrostatische Druck ermittelt wird, sondern lediglich eine damit zusammenhängende Größe wie beispielsweise ein Füllstand in dem Vollmilchtank, der wie oben erläutert zum Beispiel mit einem Füllstandssensor ermittelt werden kann. In beiden Fällen kann die Vollmilch-Dosiermenge weitgehend unabhängig vom Füllstand des Vollmilchtanks exakt eingehalten werden.

In einer Ausgestaltung weist das Fütterungssystem ein Gehäuse auf, in dem der Anmischbehälter mit dem Rührwerk, die Milchaustauscher-Zuführeinrichtung, die Wasser-Zuführeinrichtung, die Vollmilch-Zuführeinrichtung und die elektronische Steuerung angeordnet sind. Wahlweise kann in dem Gehäuse auch der Vorratsbehälter für den Milchaustauscher angeordnet sein. Insbesondere kann ein herkömmlicher Tränkeautomat verwendet werden, der ein Gehäuse umfasst, das die genannten Komponenten enthält.

In einer Ausgestaltung ist der Vollmilchtank ein externer Vollmilchtank. In diesem Fall kann das gesamte Fütterungssystem im Wesentlichen aus einem Tränkeautomaten und einem damit verbundenen, externen Vollmilchtank bestehen. Dies kann die Handhabung des Fütterungssystems vereinfachen, insbesondere weil die Vollmilch in dem externen Vollmilchtank unter Umständen einfacher gekühlt werden kann. Statt den Vollmilchtank zu befüllen, kann ein zuvor aufgefüllter, externer Vollmilchtank mit dem Tränkeautomaten verbunden werden. Der oben genannte Befüllzeitpunkt des Vollmilchtanks ist dann der Zeitpunkt, zu dem ein gefüllter Vollmilchtank an den Tränkeautomaten angeschlossen wird. Der externe Vollmilchtank ist nicht in dem genannten Gehäuse angeordnet. Vielmehr weist der externe Vollmilchtank einen separaten Behälter auf, der wahlweise auf einem fahrbaren Untersatz angeordnet sein kann.

In einer Ausgestaltung ist der Sensor ein in dem externen Vollmilchtank angeordneter Füllstandssensor. In diesem Fall kann die verfügbare Vollmilchmenge besonders genau bestimmt werden, da der Füllstandssensor auf den Vollmilchtank abgestimmt sein kann. Damit die elektronische Steuerung die Informationen von dem Füllstandssensor auswerten kann, kann eine geeignete Datenverbindung, beispielsweise über eine Steuerleitung, hergestellt werden.

In einer Ausgestaltung ist der Sensor ein in dem Gehäuse angeordneter Differenzdrucksensor. In diesem Fall kann der Sensor in dem Tränkeautomaten angeordnet sein und gegebenenfalls mit unterschiedlichen externen Vollmilchtanks zusammenwirken. Um aus einem gemessenen Differenzdruck auf die in dem Vollmilchtank vorhandene Vollmilchmenge schließen zu können, können in der elektronischen Steuerung geeignete Daten über den Vollmilchtank hinterlegt werden.

Nachfolgend wird die Erfindung anhand eines in einer Figur dargestellten Ausführungsbeispiels näher erläutert.

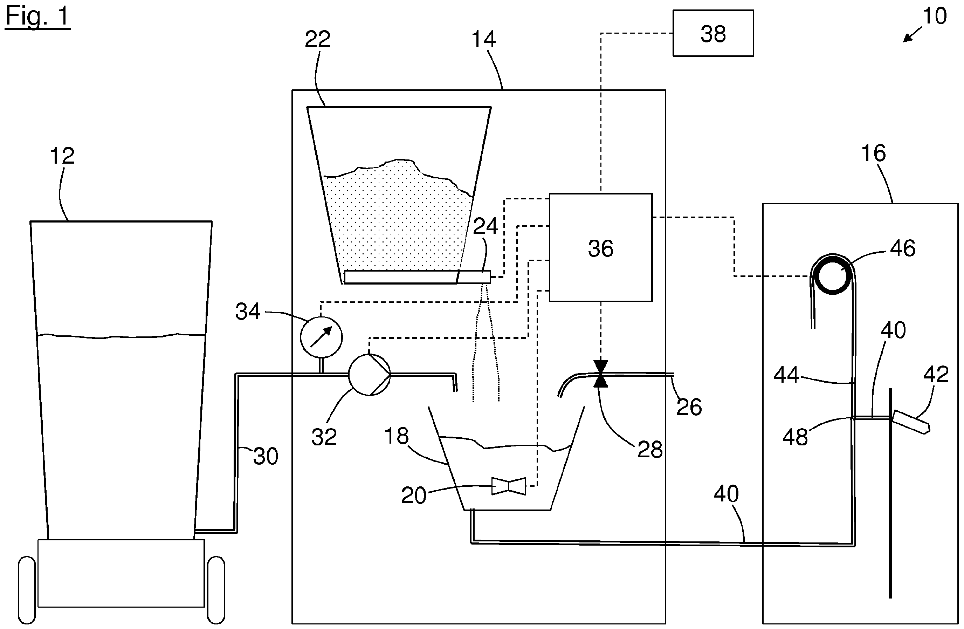

Die einzige Figur zeigt ein Fütterungssystem in einer schematischen Darstellung.

Das Fütterungssystem 10 umfasst einen Vollmilchtank 12, einen Tränkeautomaten 14 und einen Abrufstand 16.

Der Tränkeautomat 14 umfasst ein Gehäuse, in dem ein Anmischbehälter 18 angeordnet ist. In dem Anmischbehälter 18 befindet sich ein Rührwerk 20.

Ebenfalls in dem Gehäuse des Tränkeautomaten 14 angeordnet ist ein Vorratsbehälter 22 für Milchaustauscher mit einer Milchaustauscher-Zuführeinrichtung in Form einer Förderschnecke 24. Die Förderschnecke 24 ist so angeordnet, dass Milchaustauscher aus dem Vorratsbehälter 22 direkt in den Anmischbehälter 18 gefördert werden kann.

Weiterhin umfasst der Tränkeautomat 14 eine Wasser-Zuführeinrichtung mit einer Leitung, die von einem Wasseranschluss 26 zu dem Anmischbehälter 18 führt und in der eine Absperreinrichtung, hier in Form eines Magnetventils 28, angeordnet ist.

Außerdem gibt es eine Vollmilch-Zuführeinrichtung mit einer Leitung 30, die von dem Vollmilchtank 12 zu dem Anmischbehälter 18 führt. In der Leitung 30 ist eine Milchförderpumpe 32 angeordnet. An der Saugseite der Milchförderpumpe 32 weist die Leitung 30 zudem einen Sensor zur Ermittlung einer in dem Vollmilchtank 12 enthaltenen Vollmilchmenge auf. Bei diesem Sensor handelt es sich um einen Differenzdrucksensor 34.

Schließlich umfasst der Tränkeautomat 14 eine elektronische Steuerung 36, die über gestrichelt dargestellte Steuerleitungen mit dem Rührwerk 20, der Milchförderpumpe 32, dem Differenzdrucksensor 34, der Förderschnecke 24 und dem Magnetventil 28 verbunden ist. Ebenfalls mit der elektronischen Steuerung 36 verbunden ist eine Eingabevorrichtung 38, mit der insbesondere eine Anzahl von zu versorgenden Nutztieren und ein Zeitpunkt, zu dem der Vollmilchtank 12 befüllt bzw. ein gefüllter Vollmilchtank 12 an den Tränkeautomaten 14 angeschlossen wird, eingegeben werden kann.

Von dem Anmischbehälter 18 des Tränkeautomaten 14 führt eine weitere Leitung 40 zu dem Abrufstand 16, genauer zu einem Saugnuckel 42, der in dem Abrufstand 16 angeordnet ist. An einem Abzweigpunkt 48 zwischen dem Anmischbehälter 18 und dem Saugnuckel 42 zweigt kurz vor dem Saugnuckel 42 eine Abzweigleitung 44 von der weiteren Leitung 40 ab und führt zu einer Schlauchpumpe 46, die über eine ebenfalls gestrichelt eingezeichnete Steuerleitung ihrerseits mit der elektronischen Steuerung 26 verbunden ist. Durch Ansteuern der Schlauchpumpe 46 kann die Tränke von dem Anmischbehälter 18 bis kurz vor den Saugnuckel 42 gefördert werden.

Die elektronische Steuerung 36 ist dazu ausgebildet, das Fütterungssystem 10 wie folgt zu steuern: Auf Grundlage der mit der Eingabevorrichtung 38 eingegebenen Informationen wird zunächst berechnet, welche Tränkemenge bzw. wie viele Tränkeportionen bis zum nächsten Befüllzeitpunkt voraussichtlich hergestellt werden sollen. Sind beispielsweise 20 Kälber mit jeweils 6 Liter Tränke pro Tag zu versorgen und liegt der Befüllzeitpunkt für die nächste Befüllung des Vollmilchtanks 12 einen Tag in der Zukunft, müssen voraussichtlich 120 Liter Tränke hergestellt werden, was bei einer Portionsgröße von 2 Litern 60 Tränkeportionen entspricht.

Weiterhin ermittelt die elektronische Steuerung 36 auf Grundlage der Daten von dem Druckdifferenzsensor 34 die in dem Vollmilchtank 12 enthaltene Vollmilchmenge. Beträgt diese beispielsweise 60 Liter, ermittelt die elektronische Steuerung 36 eine Vollmilch-Dosiermenge von einem Liter für jede der 60 voraussichtlich anzumischenden Tränkeportionen.

Sodann steuert die elektronische Steuerung 36 die Milchförderpumpe 32 beim Anmischen einer Tränkeportion so an, dass genau diese Vollmilch-Dosiermenge von einem Liter in den Anmischbehälter 18 eingegeben wird. Zusätzlich werden mit Hilfe der Förderschnecke 24 Milchaustauscher und durch Ansteuern des Magnetventils 28 Wasser in geeigneten Mengen in den Anmischbehälter 18 eingegeben, um einen weiteren Liter Tränke zu der Tränkeportion beizutragen. Anschließend wird das Rührwerk 20 eingeschaltet, um die Tränkeportion fertigzustellen.

### Liste der verwendeten Bezugszeichen:

- 10: Fütterungssystem
- 12: Vollmilchtank
- 14: Tränkeautomat
- 16: Abrufstand
- 18: Anmischbehälter
- 20: Rührwerk
- 22: Vorratsbehälter für Milchaustauscher
- 24: Förderschnecke
- 26: Wasseranschluss
- 28: Magnetventil
- 30: Leitung
- 32: Milchförderpumpe
- 34: Druckdifferenzsensor
- 36: elektronische Steuerung
- 38: Eingabevorrichtung
- 40: weitere Leitung
- 42: Saugnuckel
- 44: Abzweigleitung
- 46: Schlauchpumpe
- 48: Abzweigpunkt

## Patentansprüche

1. Fütterungssystem (10) zur Versorgung von Nutztieren mit:
• einem Wasseranschluss (26),
• einem Vorratsbehälter (22) für Milchaustauscher,
• einem Vollmilchtank (12),
• einem Anmischbehälter (18), in dem eine Tränkeportion anmischbar ist,
• einem in dem Anmischbehälter (18) angeordneten Rührwerk (20),
• einer Vollmilch-Zuführeinrichtung, mit der dem Anmischbehälter (18) Vollmilch aus dem Vollmilchtank (12) zugeführt werden kann,
• einer Milchaustauscher-Zuführeinrichtung, mit der dem Anmischbehälter (18) Milchaustauscher aus dem Vorratsbehälter (22) zugeführt werden kann,
• einer Wasser-Zuführeinrichtung, mit der dem Anmischbehälter (18) Wasser von dem Wasseranschluss (26) zugeführt werden kann,
• einer elektronischen Steuerung (36), die mit dem Rührwerk (20), der Vollmilch-Zuführeinrichtung, der Milchaustauscher-Zuführeinrichtung und der Wasser-Zuführeinrichtung verbunden ist,
• wobei die elektronische Steuerung (36) dazu ausgebildet ist, durch Ansteuern der Vollmilch-Zuführeinrichtung, der Milchaustauscher-Zuführeinrichtung, der Wasser-Zuführeinrichtung sowie des Rührwerks (20) eine Tränkeportion anzumischen, **dadurch gekennzeichnet, dass**
• das Fütterungssystem einen Sensor zur Ermittlung einer in dem Vollmilchtank (12) enthaltenen Vollmilchmenge aufweist, wobei die elektronische Steuerung (36) mit dem Sensor verbunden ist, und
• die elektronische Steuerung (36) dazu ausgebildet ist, auf Grundlage der mit dem Sensor ermittelten Vollmilchmenge eine Vollmilch-Dosiermenge zu bestimmen und die Tränkeportion so anzumischen, dass die Tränkeportion diese Vollmilch-Dosiermenge enthält, wobei
• das Fütterungssystem eine Eingabevorrichtung (38) zum Eingeben einer Information über einen Befüllzeitpunkt des Vollmilchtanks (12) aufweist, wobei die Steuerung (36) dazu ausgebildet ist, auf Grundlage dieser Information eine Anzahl von bis zu dem Befüllzeitpunkt anzumischenden Tränkeportionen zu ermitteln und die Vollmilch-Dosiermenge so festzulegen, dass die Vollmilchmenge zu dem Befüllzeitpunkt aufgebraucht ist.

2. Fütterungssystem (10) nach Anspruch 1, **gekennzeichnet durch** eine Eingabevorrichtung (38) zum Eingeben einer Information über eine Anzahl der zu versorgenden Nutztiere, wobei die Steuerung (36) dazu ausgebildet ist, diese Information bei der Bestimmung der Vollmilch-Dosiermenge zu berücksichtigen.

3. Fütterungssystem (10) nach Anspruch 1 oder 2, **dadurch gekennzeichnet, dass** der Sensor ein Füllstandssensor in dem Vollmilchtank (12) ist.

4. Fütterungssystem (10) nach Anspruch 1 oder 2, **dadurch gekennzeichnet, dass** der Sensor ein Differenzdrucksensor (34) ist, der in einer mit dem Vollmilchtank (12) verbundenen Leitung (30) der Vollmilch-Zuführeinrichtung angeordnet ist.

5. Fütterungssystem (10) nach einem der Ansprüche 1 bis 4, dadurch gekenzeichnet, dass die Vollmilch-Zuführeinrichtung eine Milchförderpumpe (32) aufweist, wobei die Steuerung (36) dazu ausgebildet ist, anhand der Vollmilch-Dosiermenge und eines Kalibrierfaktors eine Einschaltdauer für die Milchförderpumpe (32) zu berechnen und dem Anmischbehälter (18) die Vollmilch-Dosiermenge durch Einschalten der Milchförderpumpe (32) für die berechnete Einschaltdauer zuzuführen.

6. Fütterungssystem (10) nach Anspruch 5, **dadurch gekennzeichnet, dass** die Steuerung (36) dazu ausgebildet ist, den Kalibrierfaktor vor jedem Anmischvorgang unter Berücksichtigung der von dem Sensor erfassten Daten festzulegen.

7. Fütterungssystem (10) nach einem der Ansprüche 1 bis 6, **gekennzeichnet durch** ein Gehäuse, in dem der Anmischbehälter (18) mit dem Rührwerk (20), die Milchaustauscher-Zuführeinrichtung, die Wasser-Zuführeinrichtung, die Vollmilch-Zuführeinrichtung und die elektronische Steuerung (36) angeordnet sind.

8. Fütterungssystem (10) nach einem der Ansprüche 1 bis 7, **dadurch gekennzeichnet, dass** der Vollmilchtank (12) ein externer Vollmilchtank (12) ist.

9. Fütterungssystem (10) nach Anspruch 8, **dadurch gekennzeichnet, dass** der Sensor ein in dem externen Vollmilchtank (12) angeordneter Füllstandssensor ist.

10. Fütterungssystem (10) nach Anspruch 7 und 8, **dadurch gekennzeichnet, dass** der Sensor ein in dem Gehäuse angeordneter Differenzdrucksensor (34) ist.

## Claims

1. A feeding system (10) for supplying livestock having:
• a water connection (26),
• a storage container (22) for milk replacer,
• a whole milk tank (12),
• a mixing container (18) in which a feeding portion can be mixed,
• an agitator (20) arranged in the mixing container (18),
• a whole milk supply apparatus with which whole milk from the whole milk tank (12) can be supplied to the mixing container (18),
• a milk exchanger supply apparatus with which milk replacer from the storage container (22) can be supplied to the mixing container (18),
• a water supply apparatus with which water from the water connection (26) can be supplied to the mixing container (18),
• an electronic control (36) which is connected to the agitator (20), the whole milk supply apparatus, the milk replacer supply apparatus and the water supply apparatus,
• wherein the electronic control (36) is designed to mix a feeding portion by actuating the whole milk supply apparatus, the milk replacer supply apparatus, the water supply apparatus as well as the agitator (20), **characterized in that**
• the feeding system has a sensor for ascertaining a quantity of whole milk contained in the whole milk tank (12), wherein the electronic control (36) is connected to the sensor, and
• the electronic control (36) is designed to determine a whole milk dosing quantity on the basis of the whole milk quantity ascertained by the sensor, and to mix the feeding portion so that the feeding portion contains this whole milk dosing quantity, wherein
• the feeding system has an input device (38) for inputting information on a filling time for the whole milk tank (12), wherein the control (36) is designed to ascertain a number of feeding portions to be mixed up to the filling time and to establish the whole milk dosing quantity such that the whole milk quantity is used up at the filling time.

2. The feeding system (10) according to claim 1, **characterized by** an input device (38) for entering information on a number of livestock to be fed, wherein the control (36) is designed to take into account this information when determining the whole milk dosing quantity.

3. The feeding system (10) according to claim 1 or 2, **characterized in that** the sensor is a fill level sensor in the whole milk tank (12).

4. The feeding system (10) according to claim 1 or 2, **characterized in that** the sensor is a differential pressure sensor (34) that is arranged in a line (30) of the whole milk supply apparatus connected to the whole milk tank (12).

5. The feeding system (10) according to one of claims 1 to 4, **characterized in that** the whole milk supply apparatus has a milk delivery pump (32), wherein the control (36) is designed to calculate a switched-on duration for the milk delivery pump (32) using the whole milk dosing quantity and a calibration factor, and to supply the whole milk dosing quantity to the mixing container (18) by switching on the milk delivery pump (32) for the calculated switched-on duration.

6. The feeding system (10) according to claim 5, **characterized in that** the control (36) is designed to establish the calibration factor before each mixing process taking into account the data recorded by the sensor.

7. The feeding system (10) according to one of claims 1 to 6, **characterized by** a housing in which the mixing container (18) with the agitator (20), the milk replacer supply apparatus, the water supply apparatus, the whole milk supply apparatus and the electronic control (36) are arranged.

8. The feeding system (10) according to one of claims 1 to 7, **characterized in that** the whole milk tank (12) is an external whole milk tank (12).

9. The feeding system (10) according to claim 8, **characterized in that** the sensor is a fill level sensor arranged in the external whole milk tank (12).

10. The feeding system (10) according to claim 7 and 8, **characterized in that** the sensor is a differential pressure sensor (34) arranged in the housing.

## Revendications

1. Système d'affouragement (10) destiné à alimenter du bétail avec :
• un raccord d'eau (26),
• un réservoir (22) de lactoremplaceur,
• une cuve de lait entier (12),
• un bac de mélange (18), dans lequel une potion peut être brassée,
• un agitateur (20) disposé dans le bac de mélange (18),
• un dispositif d'alimentation de lait entier permettant d'amener le lait entier de la cuve de lait entier (12) jusqu'au bac de mélange (18),
• un dispositif d'alimentation de lactoremplaceur permettant d'amener le lactoremplaceur du réservoir (22) jusqu'au bac de mélange (18),
• un dispositif d'alimentation d'eau permettant d'amener l'eau du raccord d'eau (26) jusqu'au bac de mélange (18),
• une commande électronique (36), qui est reliée à l'agitateur (20), au dispositif d'alimentation de lait entier, au dispositif d'alimentation de lactoremplaceur et au dispositif d'alimentation d'eau,
• dans lequel la commande électronique (36) est conçue de manière à brasser une potion par activation du dispositif d'alimentation de lait entier, du dispositif d'alimentation de lactoremplaceur, du dispositif d'alimentation d'eau ainsi que de l'agitateur (20), **caractérisé en ce que**
• le système d'affouragement présente un capteur pour détecter la quantité de lait entier contenu dans la cuve de lait entier (12), dans lequel la commande électronique (36) est reliée au capteur, et
• la commande électronique (36) est conçue de manière à déterminer la dose de lait entier sur la base de la quantité de lait entier détectée par le capteur et de brasser la potion de sorte que la potion contienne cette dose de lait entier, dans lequel
• le système d'affouragement présente un dispositif de saisie (38) pour entrer une information sur le moment de remplissage de la cuve de lait entier (12), dans lequel la commande (36) est conçue de manière à évaluer un nombre de potions à brasser jusqu'au moment de remplissage sur la base de cette information et à établir la dose de lait entier de sorte que la quantité de lait entier est épuisée au moment du remplissage.

2. Système d'affouragement (10) selon la revendication 1, **caractérisé par** un dispositif de saisie (38) pour entrer une information sur un nombre de têtes de bétail à alimenter, dans lequel la commande (36) est conçue de manière à prendre en compte cette information lors de la détermination de la dose de lait entier.

3. Système d'affouragement (10) selon la revendication 1 ou 2, **caractérisé en ce que** le capteur est un capteur de niveau de remplissage dans la cuve de lait entier (12).

4. Système d'affouragement (10) selon la revendication 1 ou 2, **caractérisé en ce que** le capteur est un capteur de pression différentielle (34), qui est disposé dans une conduite reliée à la cuve de lait entier (12) du dispositif d'alimentation de lait entier.

5. Système d'affouragement (10) selon l'une des revendications 1 à 4, **caractérisé en ce que** le dispositif d'alimentation de lait entier présente une pompe d'alimentation (32), dans lequel la commande (36) est conçue de manière à calculer une durée de mise en circuit de la pompe d'alimentation (32) à l'aide de la dose de lait entier et d'un facteur de calibrage et à amener la dose de lait entier jusqu'au bac de mélange (18) par l'activation de la pompe d'alimentation (32) pendant la durée de mise en circuit calculée.

6. Système d'affouragement (10) selon la revendication 5, **caractérisé en ce que** la commande (36) est conçue de manière à établir le facteur de calibrage avant chaque processus de mélange compte tenu des données acquises par le capteur.

7. Système d'affouragement (10) selon l'une des revendications 1 à 6, **caractérisé par** un carter, dans lequel le bac de mélange (18) pourvu de l'agitateur (20), le dispositif d'alimentation de lactoremplaceur, le dispositif d'alimentation d'eau, le dispositif d'alimentation de lait entier et la commande électronique (36) sont disposés.

8. Système d'affouragement (10) selon l'une des revendications 1 à 7, **caractérisé en ce que** la cuve de lait entier (12) est une cuve de lait entier (12) externe.

9. Système d'affouragement (10) selon la revendication 8, **caractérisé en ce que** le capteur est un capteur de niveau de remplissage disposé dans la cuve de lait entier (12) externe.

10. Système d'affouragement (10) selon les revendications 7 et 8, **caractérisé en ce que** le capteur est un capteur de pression différentielle (34) disposé dans le carter.
